# EUROPÄISCHE PATENTSCHRIFT

(11) **EP 0 534 061 B1**
(45) Veröffentlichungstag und Bekanntmachung des Hinweises auf die Patenterteilung: **21.08.1996**
(21) Anmeldenummer: 92109681.4
(22) Anmeldetag: 09.06.1992
(51) Int. Cl.: F22B 17/04

(54) **Wärmetauscher**
Heat exchanger
Echangeur de chaleur

(30) Priorität: 19.06.1991 DE 4120251
(43) Veröffentlichungstag der Anmeldung: 31.03.1993
(73) Patentinhaber: RATIONAL GmbH, D-86899 Landsberg (DE)
(72) Erfinder: Gumienny, Gerd, W-8910 Landsberg a. Lech (DE); Klouda, Jaroslav, W-8080 Fürstenfeldbruck (DE); Koch, Franz, W-8933 Untermeitingen (DE)
(74) Vertreter: Goddar, Heinz J., Dr.

(56) Entgegenhaltungen:
- CH-A- 111 207
- DE-C- 173 778
- FR-A- 479 540
- GB-A- 131 827
- GB-A- 256 041
- US-A- 1 409 345
- US-A- 2 233 537

## Beschreibung

Die Erfindung betrifft einen Wasserrohr-Wärmetauscher mit geneigten Rohren gemäß dem Oberbegriff von Patentanspruch 1.

Bei einem derartigen Wärmetauscher ist ein mit Flüssigkeit, im allgemeinen Wasser, gefülltes Gehäuse vorgesehen, welches, um einen guten Wärmeübergang zu gewährleisten, eine möglichst große Oberfläche hat. Oftmals wird das Wasser in den Wärmetauschern zwangsumgewälzt, einerseits um aufgrund von Temperaturdifferenzen auftretende mechanische Spannungen zu verhindern, andererseits um Dampfblasen aus der Flüssigkeit auszutragen, die sich während des Erhitzens bilden. Derartige Dampt- oder Gasblasen reduzieren den Wärmeübergang, der bei vollständigem Füllungsgrad des Wärmetauschers mit Flüssigkeit am höchsten ist.

Ein Wasserrohr-Wärmetauscher, gemäß dem Oberbegriff des Patentanspruchs 1, mit geneigten Rohren ist aus der GB-A 131,827 bekannt. Es sind die Rohre gleicher Neigung zu jeweils einem Bündel zusammengefaßt, wobei die Mündungen der Rohre jedes Bündels in ihrer Gesamtheit versetzt zueinander in die Kammern münden und durch einen deutlichen Abstand in vertikaler Richtung voneinander getrennt sind. Damit soll erreicht werden, daß die beheizten Rohrbündel jeweils im Gegenstrom zu den Feuergasen liegen, wodurch sich eine günstige Wärmeausnutzung ergeben soll.

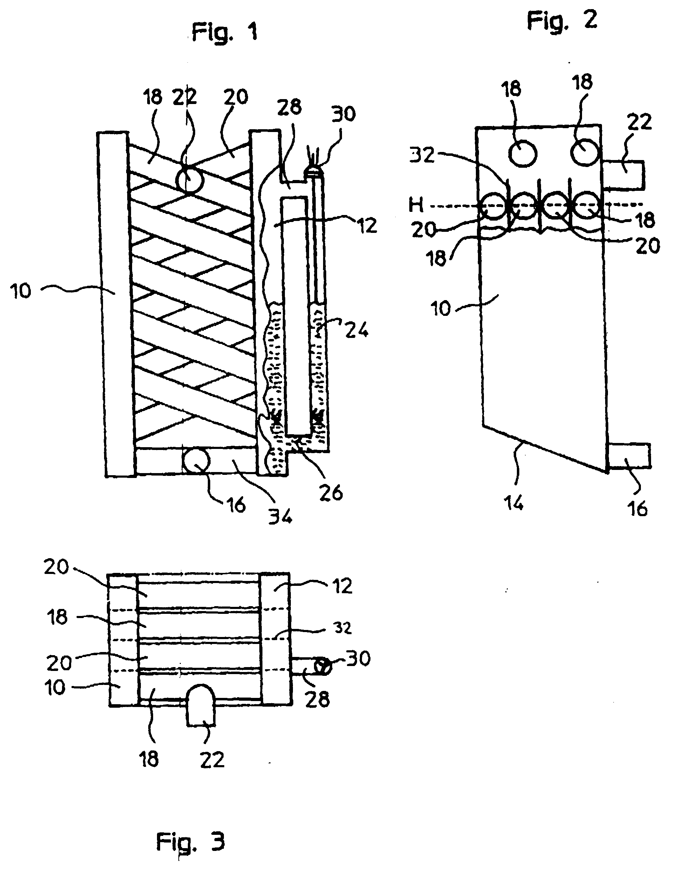

Die CH-A 111 207 offenbart einen Wasserrohr-Wärmetauscher für den Einsatz bei Lokomotiven. Die Rohre unterschiedlicher Neigung münden dabei, wie insbesondere aus der Figur 1 ersichtlich, in voneinander getrennten Kammern a, b, so daß jeder Rohrreihe zwei Wasserkammern zugeordnet sind, welche zwar in der gleichen Zone des Heizraumes liegen, wobei aber jegliche Konvektion zwischen den Kammern, als Folge davon auch zwischen den Rohrbündeln, ausgeschlossen ist.

Aus der US-A 1,409,345 ist ein weiterer Wasserrohr-Wärmetauscher bekannt, bei dem allerdings nur Rohre mit gleicher Neigung vorgesehen sind; obwohl diese durchaus unterschiedliche Funktion zu erfüllen haben, sind die entsprechenden Rohrgruppen doch parallel zueinander angeordnet.

Ein ähnlicher Wasserrohr-Wärmetauscher ist in der DE-C 173 778 beschrieben.

In der GB-A 256,041 sind Rohre unterschiedlicher Neigung senkrecht zueinander verlaufend angeordnet. Einen gemeinsamen Mündungsbereich für die verschiedenen Rohrbündel gibt es nicht, denn diese Bereiche liegen in Ebenen, die untereinander einen rechten Winkel einschließen.

Die FR-A 479,540 offenbart einen Wasserrohr-Wärmetauscher, bei dem der Gegenstrom der Flüssigkeit in Rohren mit im wesentlichen gleicher Neigung zueinander erfolgen soll.

Bei dem Wärmetauscher gemäß der US-A 2,233,537 erfolgt die Wärmeströmung durch abwechselnd geneigte Rohre, deren Neigung aber in Richtung auf den oberen Teil des Wärmetauschers hin abnimmt. Obwohl die Rohrleitungen sich teilweise überkreuzen, findet zwischen den Mündungsbereichen der beiden Rohrsätze kein Wärmeaustausch statt.

Ausgehend von dem Stand der Technik, wie er in der GB-A 131,827 beschrieben ist, ist es die Aufgabe der Erfindung, einen Wärmetauscher zu schaffen, bei dem der Wärmeaustausch deutlich verbessert ist.

Diese Aufgabe wird von einem Wärmetauscher der eingangs genannten Gattung mit den Merkmalen des Kennzeichens von Patentanspruch 1 gelöst. Vorteilhafte Ausgestaltungen sind Gegenstand der auf ihn rückbezogenen Unteransprüche.

Erfindungsgemäß ist vorgesehen, daß die Rohre entgegengesetzter Neigung in jeweils eine der Kammern so einmünden, daß die Neigungen benachbarter Rohre alternierend sind.

Bei geneigt verlaufenden Rohren werden die in der Flüssigkeit entstehenden Dampfblasen rasch nach oben, und zwar zu der jeweils durch die Neigung bestimmten Seite abgeführt und gelangen in die Kammern. Es wird also wirkungsvoll verhindert, daß sich Dampfblasen in der zu erhitzenden Flüssigkeit ansammeln und so die Wärmeübertragung behindern. Die Dampftemperatur läßt sich nun über den Flüssigkeitspegel variieren. Wenn nur ein Teil des Wärmetauschergehäuses mit Flüssigkeit gefüllt ist, werden die weiter oben liegenden Bereiche von dem erzeugten Dampf durchströmt, der durch den Kontakt mit den heißen Wänden der Kammern und der Rohre, die in diesem Bereich nicht durch Flüssigkeit abgedeckt sind und deren Temperatur daher deutlich über der Siedetemperatur des Wassers liegt, überhitzt wird. Allgemein wird bei einem derartigen Wärmetauscher die Temperatur des erzeugten Dampfes um so höher sein, je weniger Flüssigkeit in dem Gehäuse steht, da der Dampf dann mit einer größeren gegenüber der Siedetemperatur überhitzten Kontaktfläche in Berührung kommt. Das geneigt verlaufende Rohr bleibt selbst frei von Ablagerungen, da diese sich, auch wenn es sich um Abplatzungen handelt, unter dem Einfluß der Schwerkraft nach unten bewegen. Die Rohre können einen verhältnismäßig großen Durchmesser aufweisen, wodurch der Verstopfungsgefahr weiter entgegengewirkt wird. Der Abtransport der bei hartem Wasser auftretenden Kalkablagerungen oder anderer Verunreinigungen kann weiterhin dadurch gefördert werden, daß die Böden der Kammern schräg auf einen gemeinsamen tiefstgelegenen Punkt geführt werden, von dem die Ablagerungen leicht entfernt werden können, bspw. durch Ausspülen. Die in einer Ebene alternierende Neigung der Rohre hat den Vorteil, daß den aufwärtsströmenden Abgasen des Brenners jeweils eine tangentiale Bewegungskomponente gegeben wird, die dazu fürht, daß die Abgase jeweils nach dem Passieren eines Bereiches zwischen benachbart liegenden Rohren bevorzugt auf die Wände der Kammern hin gerichtet werden, die demzufolge in besonders günstiger Weise mit Abgasen beaufschlagt werden, woraus eine Erhöhung des Wärmeaustausches resultiert.

Es können die Rohre unterschiedlicher Neigung in im wesentlichen senkrecht zu den Kammern liegenden Vertikalebenen angeordnet sein. In einer solchen Vertikalebene liegen also nur Rohre mit gleicher Neigung, anschließend sind Rohre der entgegengesetzten Neigung in einer weiteren Vertikalebene angeordnet. Dieser Aufbau hat den Vorzug, daß er in der Konstruktion sehr einfach ist.

Die verbindenden Rohre tragen bei allen Ausführungsformen die Kammern, so daß sich durch Temperaturänderungen auftretende mechanische Spannungen leicht ausgleichen können.

Bevorzugt ist in wenigstens einer der Kammern wenigstens eine vertikal angeordnete Trennwand vorgesehen, die sich zumindest teilweise über die Höhe der Kammer(n) erstreckt. An solchen Trennwänden lagern sich Dampfblasen an, die dann in den oberen Bereich des Wärmetauschers abgeführt werden.

Weiter bevorzugt ist es, wenn die Trennwand bzw. die Trennwände im Bereich zwischen den Einmündungen von Rohren entgegengesetzter Neigung vorgesehen ist/sind. Dampfblasen werden dann sofort aus den Rohren oder den Kammern abgeleitet, sobald sie eines der geneigt verlaufenden Rohre passiert haben. Einer möglichen Ansammlung von Dampfblasen in weiter oben gelegenen Rohren wird damit wirksam vorgebeugt.

Der erfindungsgemäße Wärmetauscher läßt sich gleichzeitig als Dampfüberhitzer und als Dampferzeuger verwenden. Diese Anwendung kann beispielsweise für Küchengeräte und dgl. von Bedeutung sein. Zum Entnehmen des Dampfes ist im oberen Bereich des Wärmetauschers ein Auslaß vorgesehen.

Im folgenden soll die Erfindung lediglich beispielhaft anhand der beigefügten Zeichnungen näher erläutert werden. Es zeigt:
- Fig. 1: eine schematische Vorderansicht, teilweise aufgerissen, des erfindungsgemäßen Wärmetauschers;
- Fig. 2: eine Seitenansicht, ebenfalls teilweise aufgerissen, des Wärmetauschers aus Fig. 1 und
- Fig. 3: eine Draufsicht auf den Wärmetauscher.

Figur 1 zeigt einen Wärmetauscher, der aus zwei vertikal stehenden, im wesentlichen quaderförmigen Kammern 10, 12 aufgebaut ist, welche in ihrem unteren Bereich in einen geneigt verlaufenden Bodenabschnitt 14 übergehen. Etwa an ihrer tiefsten Stelle sind die Kammern 10, 12 durch ein Verbindungsrohr 34 miteinander verbunden, das, im wesentlichen mittig angeordnet, eine Auslaßöffnung 16 aufweist, über die Ablagerungen und dgl., die sich im Bodenabschnitt 14 sammeln, leicht ausgespült bzw. abgelassen werden können. Die Kammern 10, 12 stehen durch eine Vielzahl von Rohren 18, 20 miteinander in Verbindung. Dabei sind jeweils fünf solcher Rohre in einer Vertikalebene angeordnet, die senkrecht zwischen den beiden Kammern 10,12 liegt. Beispielsweise verlaufen die Rohre 18 in der ersten Ebene von der Kammer 10 schräg nach unten geneigt zur Kammer 12. In der dahinterliegenden Ebene verlaufen die Rohre 20 von der Kammer 12 schräg nach unten geneigt zur Kammer 10. Die Mündungsbereiche unterschiedlich geneigter Rohre 18, 20 liegen dabei im wesentlichen in einer gemeinsamen Horizontalebene zwischen den Kammern 10, 12, sie sind - wie Figur 2 zu entnehmen ist und im Zusammenhang mit dieser Figur näher beschrieben wird - durch vertikal angeordnete Trennwände 32 voneinander getrennt. Im oberen Bereich ist an einem der Rohre 18 eine Dampfaustrittsöffnung 22 vorgesehen, über die der erzeugte Dampf abgeführt werden kann. Die Füllung der Kammern mit Wasser erfolgt über eine Wassereintrittsöffnung 16. Parallel zur Kammer 12 ist eine Rohrleitung 24 angeordnet, die in ihrem unteren und dem oberen Bereich durch je eine Passage 26, 28 mit der Kammer in Verbindung steht. Am oberen Ende der Rohrleitung 24 ist ein Füllstandssensor 30 vorgesehen.

Die Anordnung wird über eine nicht dargestellte Zuleitung und die Wassereinlaßöffnung 16 mit Flüssigkeit, beispielsweise Wasser, bis zu einem gewissen Pegel gefüllt, wobei der Pegelstand mit Hilfe des Füllstandssensors 30 erfaßt wird. Durch einen ebenfalls nicht dargestellten Gasbrenner, der unterhalb des Wärmetauschers angeordnet ist, wird das Wasser erhitzt, woraufhin sich oberhalb des Wasserstandes, d.h. im oberen Bereich der Kammern 10, 12, im oberen Bereich der Rohre 18, 20 und auch der Rohrleitung 24 und der Passage 28 überhitzter Dampf ausbildet. Die Wärmeenergie für die Erhitzung des Wassers und die Überhitzung des Dampfes wird durch die von unten nach oben die Rohre 18, 20 umströmenden Abgase des Gasbrenners geliefert.

Figur 2 zeigt den Wärmetauscher aus Figur 1 in Seitenansicht. Die Mündungen von Rohren 18, 20 liegen in einer gemeinsamen Horizontalebene H, von denen nur eine eingezeichnet ist.

In der obersten Ebene münden nur jeweils zwei der Rohre 18 in den Bereich der Kammer 10 bzw. der Rohre 20 in den Bereich der Kammer 12. Etwa im Kreuzungsbereich der obersten entgegengesetzt geneigt verlaufenden Rohre 18, 20 befindet sich die Dampfaustrittsöffnung 22, am tiefstliegenden Bereich des Wärmetauschers, am Verbindungsrohr 34, die Wassereinlaßöffnung 16, durch die auch Ablagerungen, wie Kalkabplatzungen etc., entfernt werden können. Zwischen den Einmündungen unterschiedlich geneigter Rohre 18, 20 in die Kammern 10, 12 befindet sich jeweils eine vertikale Trennwand 32, die sich nahezu bis zum Boden der jeweiligen Kammer erstreckt, von diesem jedoch so weit entfernt ist, daß der Abtransport von Ablagerungen über den Bodenbereich 14 nicht behindert wird. Im oberen Bereich der Kammern 10, 12 enden die Trennwände 32 etwas oberhalb des höchsten Mündungsbereiches unterschiedlich geneigter Rohre 18, 20. Die Trennwände 32 können durchgehend sein, die Kammern 10, 12 also, abgesehen von deren oberstem bzw. unterstem Bereich in einzelne Abteilungen aufteilen und so seitlich gerichtete Strömungen verhindern, sie können aber auch mehrteilig sein, Ausnehmungen aufweisen oder sich nur teilweise über die Kammern 10, 12 erstrecken, wenn dies zweckmäßig erscheint.

Figur 3 zeigt den Wärmetauscher aus Figur 1 von oben. Zwischen den beiden zueinander parallel angeordneten Kammern 10, 12 sind senkrecht dazu die Rohre 18,20 jeweils, wie schon oben beschrieben, in Vertikalebenen angeordnet. Zwischen den durch die Rohre 18 bzw. 20 gleicher Neigung gebildeten Vertikalebenen sind in beiden Kammern 10, 12 Trennwände 32 vorgesehen. Seitlich der Kammer 12 befindet sich der Füllstandssensor 30.

Bei dem hier dargestellten Ausführungsbeispiel kann der Wärmetauscher sowohl als Dampferzeuger als auch gleichzeitig als Dampfüberhitzer verwendet werden. Die Überhitzung erfolgt dabei durch den Kontakt des Dampfes in den von Flüssigkeit freien Bereichen mit den Seitenwänden der Kammern 10, 12 und den Rohren 18, 20, wobei die Kontaktflächentemperatur dort beispielsweise bei 300°C liegen kann.

Die Füllhöhe für die Flüssigkeit im Wärmetauscher richtet sich im übrigen nach der gewünschten Dampftemperatur.

### Bezugszeichenliste

10 Kammer
12 Kammer
14 Bodenabschnitt
16 Wassereinlaßöffnung
18 Rohr
20 Rohr
22 Dampfablaßöffnung
24 Rohrleitung
26 Passage
28 Passage
30 Füllstandssensor
32 Trennwand
34 Verbindungsrohr

## Patentansprüche

1. Wasserrohr-Wärmetauscher mit geneigten Rohren , mit einem Gehäuse aus wenigstens zwei einander gegenüberliegenden, im wesentlichen quaderförmigen Kammern (10,12), welche durch geneigt verlaufende Rohrgruppen (18,20) miteinander verbunden sind, wobei die Rohrgruppen eine unterschiedliche, entgegengesetzt zueinander verlaufende Neigung aufweisen, wobei die Rohre unterschiedlicher Neigung zumindest teilweise in einer gemeinsamen Horizontalebene einmünden, mit einer Einrichtung zum Befüllen des Gehäuses mit verdampfbarer Flüssigkeit bis zu einem einstellbaren Pegel und mit einer Wärmequelle zum Erhitzen von verdampfbarer Flüssigkeit,
dadurch gekennzeichnet,
daß die Rohre (18,20) entgegengesetzter Neigung an ihren Einmündungen in die Kammern (10,12) benachbart zueinander angeordnet sind.

2. Wasserrohr-Wärmetauscher nach Anspruch 1, dadurch gekennzeichnet, daß die Rohre (18,20) unterschiedlicher Neigung in senkrecht zu den Kammern (10,12) liegenden Vertikalebenen angeordnet sind.

3. Wasserrohr-Wärmetauscher nach einem der Ansprüche 1 oder 2, dadurch gekennzeichnet, daß wenigstens in einer der Kammern (10, 12) wenigstens eine vertikal angeordnete Trennwand (32) vorgesehen ist, die sich zumindest teilweise über die Höhe der Kammer(n) (10,12) erstreckt.

4. Wasserrohr-Wärmetauscher nach Anspruch 3, dadurch gekennzeichnet, daß die Trennwand/die Trennwände (32) im Bereich zwischen den Einmündungen von Rohren (18, 20) entgegengesetzter Neigung in die Kammer(n) (10, 12) vorgesehen ist/sind.

## Claims

1. Water-tube heat exchanger with inclined tubes, with a housing consisting of at least two essentially cuboid chambers (10, 12) which are disposed opposite one another and connected together by inclined tube groups (18, 20), wherein the tube groups have different inclinations extending in opposite directions to one another and the tubes of different inclinations open out at least in part in a common horizontal plane, with a device for filling the housing with vaporisable liquid up to an adjustable level, and with a heat source for heating vaporisable liquid,
characterised in that the tubes (18, 20) of opposite inclinations are disposed adjacent to one another at the points at which they open into the chambers (10, 12).

2. Water-tube heat exchanger according to claim 1, characterised in that the tubes (18, 20) of different inclinations are disposed in vertical planes lying perpendicularly to the chambers (10, 12).

3. Water-tube heat exchanger according to claim 1 or 2, characterised in that at least one vertically disposed partition (32) is provided at least in one of the chambers (10, 12), which partition extends at least in part over the height of the chamber(s) (10, 12).

4. Water-tube heat exchanger according to claim 3, characterised in that the partition(s) (32) is/are provided in the region between the points at which tubes (18, 20) of opposite inclinations open into the chamber(s) (10, 12).

## Revendications

1. Echangeur de chaleur à tuyaux d'eau comportant des tuyaux inclinés, avec un caisson constitué d'au moins deux chambres (10, 12), situées à l'opposé l'une de l'autre et globalement parallélépipédiques, que relient des groupes de tuyaux (18, 20) inclinés, les groupes de tuyaux ayant une inclinaison différente, opposée l'une à l'autre, les tuyaux d'inclinaisons différentes débouchant au moins partiellement dans un plan horizontal commun, avec un dispositif destiné au remplissage du caisson, avec un liquide pouvant être transformé en vapeur, jusqu'à un niveau réglable et avec une source de chaleur destinée à chauffer le liquide pouvant être transformé en vapeur,
caractérisé en ce que,
les tuyaux (18, 20) d'inclinaisons opposées sont disposés au voisinage les uns des autres au niveau de leurs embouchures dans les chambres (10, 12).

2. Echangeur de chaleur à tuyaux d'eau selon la revendication 1, caractérisé en ce que les tuyaux (18, 20) d'inclinaisons différentes sont agencés dans des plans verticaux perpendiculaires aux chambres (10, 12).

3. Echangeur de chaleur à tuyaux d'eau selon une des revendications 1 ou 2, caractérisé en ce qu'au moins dans une des chambres (10, 12) est prévue au moins une paroi de séparation (32) verticale qui s'étend au moins partiellement sur la hauteur de la chambre ou des chambres (10, 12).

4. Echangeur de chaleur à tuyaux d'eau selon la revendication 3, caractérisé en ce que la paroi de séparation/ou les parois de séparation (32) est ou sont prévue(s) dans la zone située entre les embouchures, dans la ou les chambre(s) (10, 12), de tuyaux (18, 20) d'inclinaisons opposées.
